(19) Europäisches Patentamt
European Patent Office
Office européen des brevets

(11) Publication number: 0 084 896
B1

(12) **EUROPEAN PATENT SPECIFICATION**

(45) Date of publication of patent specification: **02.04.86**

(51) Int. Cl.⁴: **C 08 G 65/44,** C 08 F 8/42

(21) Application number: **83200026.9**

(22) Date of filing: **07.01.83**

# (54) Catalyst for the oxidative coupling of organic compounds and method.

(30) Priority: **20.01.82 NL 8200196**

(43) Date of publication of application:
**03.08.83 Bulletin 83/31**

(45) Publication of the grant of the patent:
**02.04.86 Bulletin 86/14**

(84) Designated Contracting States:
**DE IT NL**

(56) References cited:
**FR-A-2 278 713**
**GB-A-1 105 948**
**US-A-3 313 776**

(73) Proprietor: **GENERAL ELECTRIC COMPANY**
**1 River Road**
**Schenectady New York 12305 (US)**

(72) Inventor: **Challa, Gerrit**
**Perklaan 20**
**NL-9752 GP Haren (NL)**
Inventor: **Verlaan, Johannes Petrus Jozef**
**Lichtboei 28**
**NL-9723 JB Groningen (NL)**

(74) Representative: **Grever, Frederik et al**
**General Electric Plastics B.V. P.O. Box 117**
**NL-4600 AC Bergen op Zoom (NL)**

**EP 0 084 896 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to catalysts for the oxidative coupling of organic compounds and to methods for their use. More particularly, it relates to catalysts comprising complexes of copper and substituted pyridines and their use in oxidatively coupling phenols, thiophenols, anilines, and mono- an di-acetylenes.

Catalytic systems based on metal complexes which are capable of oxidatively coupling substrates, such as aryl compounds substituted with a hydroxy group, amino group or a thiol group and acetylene compounds are generally known. (See, for example, Netherlands Patent Specification 137,851 and the corresponding United States Patent Specification 3,234,183 and United States Patent Specification 3,262,911).

Of special importance are homogeneous oxidation catalysts based on complexes of amines, chelating amines or pyridines with cuprous or cupric halides (iodide excepted), activated or not activated with equimolar quantities of alkali metal hydroxide, to produce oxidative coupling reactions of the above-mentioned compounds.

If phenolic compounds are coupled oxidatively in solution by means of homogeneous catalysis, linear polymers, cross-linked polymers or diphenoquinone derivatives are obtained, dependent on the type of the substituents at the aromatic nucleus, the temperature, the solvent used, the catalyst composition, etc.

Of special technical importance are those catalysts systems which are capable of oxidizing the above-mentioned substrates at room temperature and which are not deactivated by water, the natural by-product of oxidative coupling reactions.

Netherlands Patent Application 6,512,458 (GB—A—1,105,948) describes the use of copper complexes of a secondary or tertiary amine for the oxidative coupling of 4-halogenphenols. 2-aminopyridine is mentioned in this application as one of a great number of suitable amines.

The use of polymeric amines-copper complexes for oxidative coupling reactions has been described by Meinders and Challa. As the polymeric amine, they used a copolymer of styrene with 4-vinylpyridine. Their publication has been abstracted in Chemical Abstracts 94(10), 66095 g.

New catalyst systems have now been found which show these desired technological properties to a greater extent than the catalyst systems suggested previously in various patent specifications and in the literature.

Apart from the fact that with these systems an activity at low temperature and a great hydrolytic stability are reached, they lead to an increased selectivity with respect to C—O or C—C coupling, higher oxidation rates and a more rapid building-up of products of a high molecular weight in the case of C—O coupling.

According to the present invention, there are provided catalysts for the oxidative coupling of an organic compound having a phenol group, an amino group, a thiol group or an acetylene compound, said catalyst comprising a copper complex of a substituted amino pyridine selected from those of the formulae.

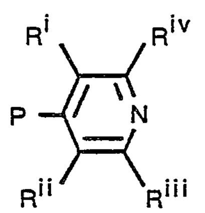

or

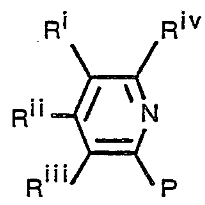

wherein $R^i$, $R^{ii}$, $R^{iii}$ and $R^{iv}$ each individually are selected from hydrogen, a hydrocarbon radical, a substituted hydrocarbon radical or a polymer chain radical, and P is an amino group of the formula —$N(R_1)(R_2)$, wherein $R_1$ and $R_2$ are selected from hydrogen, a hydrocarbon radical, a polymer chain radical or, when taken together with the nitrogen atom, form a heterocyclic ring, or a heterocyclic ring substituted with a polymer chain radical, with the proviso that $R_1$ and $R_2$ both cannot be hydrogen.

In especially preferred features of the present invention, the novel catalysts will be employed for the oxidative coupling of substituted phenols, especially 2,6-disubstituted phenols.

It has been discovered also that the copper complexes of the invention can be immobilized without this being associated with a loss of activity, stability, selectivity or their nature as homogeneous catalysts.

It is, accordingly, another feature of the invention to provide such catalysts wherein the pyridine is substituted by a polymeric chain, and is chemically bonded through such chain to solid carrier particles, such as silicon dioxide particles. Such bonding can be, for example, through a group of the formula

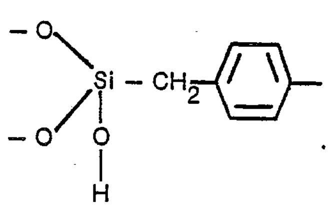

Also contemplated by the present invention is a method for the oxidative coupling of a compound selected from those of the formulae

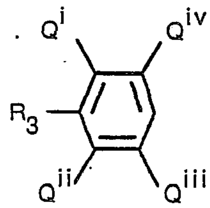

wherein $R_3$ is CH, SH or $NH_2$ and $Q^i$, $Q^{ii}$, $Q^{iii}$ and $Q^{iv}$ are, independently, hydrogen, halogen, a hydrocarbon radical, a halohydrocarbon radical, a hydrocarbonoxy radical, a halohydrocarbonoxy radical or a mixture of such compounds; an acetylenic compound of the formula

$$HC{\equiv}C{-}R_4;$$

or a diacetylenic compound of the formula

$$HC{\equiv}C{-}R_4{-}C{\equiv}CH,$$

wherein $R_4$ is an aromatic radical, a substituted aromatic radical or an aliphatic hydrocarbon radical, which comprises coupling such compounds in the presence of oxygen and a catalyst as defined hereinabove.

The radicals and substituents mentioned above are of conventional type and carbon atom content, e.g. from $C_1$ to $C_{30}$, but more usually from $C_1$ to $C_6$, for aliphatics, and from $C_6$ to $C_{30}$ for aromatics. Halogen is generally chloro or bromo.

The immobilization embodiment preferably comprises incorporating the substituted pyridines into a copolymeric molecule. Said copolymeric molecule is chemically bonded to an inert solid carrier. Such a composition can be obtained, for example, by copolymerization, initiated from initiator molecules bonded to the solid carrier. A product thus obtained which is dissolved in the reaction medium and of which a part of the amine positions has entered into a complex with copper, provides locally homogeneous catalytic groups. They may be characterized as pseudo-heterogeneous due to their fixation on an insoluble macroscopic carrier which, however, does not contribute to the oxidation reaction at its surface structure. This contrasts with what is the case with purely heterogeneous catalysis.

By a correct choice of the density and the dimensions of the particles of the carrier, and of the hydrodynamic volume of the grafted copolymer under the existing conditions of temperature and solvent used, the pseudo-heterogenic catalyst can easily be dispersed homogeneously by moderate stirring. After or during the reaction the catalyst can easily be removed by natural or forced sedimentation. In this manner, substantially copper-free reaction products are obtained by means of a method for a continuous oxidative coupling reaction with simultaneous removal of the catalyst. The catalyst can be used several times again without losing its catalytic activity.

The materials employed in the present invention can be made by obvious modifications of procedures well known to those skilled in this art.

Copolymers of substituted pyridines, such as substituted 4-vinylpyridines and styrene can be synthesized by radical polymerization in toluene using azoisobutyronitrile (AIBN) as initiator as described by Fuoss and Cathers, J. Polym. Sci. *4* (1949), 97.

A radical initiator attached to silica, e.g., Aerosil 200V, Degussa, can be synthesized according to Ferry, Laible and Hamann, Angew. Makromol. Chem. 34 (1973) 1.

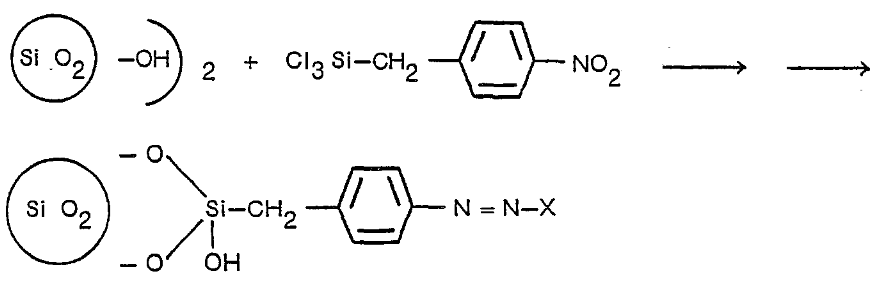

(5)

wherein X is β-thiolnaphtolate in the radical initiator (5).

The radical initiator can be used to copolymerize the respective monomers in bulk, while stirred at 60°C. in a thermostatted bath to produce the silicabound copolymers, as well as unbound copolymers. The unbound copolymers can be removed by solvent extraction, as will be shown later.

The catalyst complex can be prepared by dissolving or suspending the components in, e.g., a mixture of 1,2 dichlorobenzene and methanol. Copper can be added, e.g. in the form of a halide salt, e.g., $CuCl_2 \cdot 2H_2O$ and then to use as a coupling catalyst the mixture can be oxygenated and then the substrate, e.g., 2,6-dimethylphenol is added. The extent of coupling is measured by oxygen consumption, and the product is recovered and separated from the catalyst in conventional ways.

The products of the process, if polymers, can be shaped by conventional methods into articles with a number of uses.

The invention will be described in greater detail with reference to the following examples.

Example 1

The catalyst was prepared *in situ* as follows:
0.05 mmol of Cu (II) chloride were dissolved in 0.015 $dm^3$ of a 13:2 mixture of 1,2-dichlorobenzene and methanol in a reaction vessel having a capacity of 25 ml. Then 0.5 mmol of one of the amines mentioned in Table A were added, after which the reaction mixture was shaken and saturated with oxygen in a thermostatic bath at a temperature of 25°C. Then 0.15 mmol of 2,6-dimethylphenol were added. The oxidative coupling reaction started after the addition of 0.05 mmol of potassium hydroxide dissolved in methanol. The rate of oxygen consumption ($Po_2$ = 100 kPa) was measured with an automatic gas burette operating under isobar conditions. The reaction rates were computed from the initial rates of oxygen consumption. At the end of the reaction, the resulting polyphenylene oxide was isolated by precipitating it in an excess of acidified methanol. It was filtered off, washed with methanol, dried in vacuum at 60°C. and characterized by infrared analysis and elemental analysis as $(C_8H_8O)_n$. The intrinsic viscosity (η) was determined by means of the Ubbelohde technique in $CHCl_3$ at 25°C.

TABLE A

| Ligands[1)] | Reaction rate × $10^5$ (mol $O_2$ $dm^{-3}s^{-1}$) | Reaction time (min.) | Total conversion[2)] (in %) | PPO-yield (in %) | (η) (in ml/g) |
|---|---|---|---|---|---|
| pyridine | 8.8 | 150 | 100 | 66 | 16 |
| TMED | 19 | 150 | 90 | 29 | 7 |
| DMAP | 40[3)] | 40 | 95 | 91 | 51 |
| PP | 40[3)] | 30 | 97 | 90[4)] | 56 |

[1)] TMED = 1,2-bis(dimethylamino)ethane.
DMAP = 4-dimethylaminopyridine
PP = 4-pyrrolidinopyridine
[2)] Measured by total oxygen consumption
[3)] Reaction rate exceeds the maximum rate of the gas burette used.
[4)] This polymer comprised 0.2% by weight of nitrogen.

The results of Table A demonstrate the considerably increased oxidative polymerization rates when the 4-substituted aminepyridine catalysts (DMAP and PP) are used, compared with the normally used amines.

Furthermore, it appears that the new amines result in higher PPO-yields. The resulting polyphenylene oxides proved to have higher molecular weights and were brighter in color.

Example 2
(comparison example, outside the scope of protection)

An immobilized macromolecular copper catalyst was prepared as follows:
Firstly, as set forth hereinbefore, a radical initiator was bonded to silicon oxide (Aerosil 200 V, Degussa) according to the method described in Angew. Makromol, Chem. *34* (1973), 81. p-Nitrobenzyltrichlorosilane was coupled to the hydroxy groups on the surface of non-porous silicon dioxide spheres. The nitro groups were then reduced and the resulting amino groups were diazotized. The reaction pathway is illustrated hereinbefore. In elemental analysis the sulphur content of the final product proved to be 0.03% by weight. This corresponds to 0.01 mmol of initiator/g of silicon dioxide. The yellow-colored initiator was stored at −20°C. and used a few days after the synthesis.

A polystyrene-4-vinylpyridine copolymer was copolymerized upon said initiator. The monomers were first distilled under reduced nitrogen pressure, after which they were copolymerized under nitrogen for 20 hours while using 0.01 mmol per $dm^3$ of the immobilized radical initiator, while the reaction mixture was stirred continuously in a thermostatic bath at 60°C. The physically absorbed copolymer was removed by suspending the reaction mixture in a 13:2 v/v mixture of 1,2-dichlorobenzene and methanol. After shaking

intensively for 15 minutes, the carrier particles were allowed to deposit and the mixture of solvents was decanted. This process was repeated three times. The silicon dioxide spheres with the chemically bonded copolymer were then filtered off, washed and extracted in a Soxhlet with acetone for 8 hours, and finally dried in vacuo. The weight fraction of bonded copolymer on the silicon dioxide spheres was determined by elemental analysis.

In the tables below the ratio by weight between bonded copolymer and the sum of bonded copolymer plus plus $SiO_2$ is indicated as "degree of loading". The mol fraction of pyridine in the unbound copolymer was determined by elemental analysis. This mol fraction is indicated herebelows as "degree of functionalization".

The catalyst complex was then prepared by dispersing the immobilized copolymer in a quantity corresponding to 0.1 mmol of 4-vinylpyridine monomer units in 15 ml of a mixture of 1,2-dichlorobenzene and methanol (13:2, v/v). 0.05 mmol of $CuCl_2 \cdot 2H_2O$ and 1 ml of a standard solution of sodium hydroxide in methanol were then added. The ratio [pyridine]:$[Cu^{2+}]$ = 2. The reaction mixture was then saturated with $O_2$ in a thermostatic bath at 25°C. After the addition of 0.9 mmol of 2,6-di-tert-butylphenol, the oxygen consumption was measured under a constant oxygen pressure of 100 kPa.

After 95% of the 2,6-di-tert-butylphenol had been converted, as appeared from the overall oxygen consumption, shaking of the reaction vessel was discontinued and the immobilized catalyst was allowed to deposit for more than 1 hour. The supernatant liquid was decanted and, if necessary, centrifuged so as to restrict loss of non-deposited catalyst. A fresh quantity of the mixture of solvents was then added to the gel-like catalyst. The mixture was then saturated with oxygen. In order to disperse the catalyst again, intensive shaking had to be carried out. 0.9 mmol of 2,6-di-tert-butylphenol were then added and the rate of the oxygen consumption was measured. This was repeated several times. In all cases, only the oxidation product of the C—C coupled dimer was formed, namely, the 3,5,3',5'-tetra-tert-butyldiphenoquinone, a product which is used as a mild and selective oxidation agent for the preparation of biochemically active substrates.

TABLE B

| Details of the immobilized styrene-4-vinyl-pyridine copolymer | | Number of times the catalyst is used | Reaction rate × $10^6$ $(mol.dm^{-3}.s^{-1})$ |
|---|---|---|---|
| Degree of functionalization | Degree of loading | | |
| 0.25 | 0.15 | 1 | 3.5 |
| | | 2 | 3.7 |
| | | 3 | 3.5 |
| | | 4 | 3.5 |
| | | . | . |
| | | : | : |
| | | 9 | 3.4 |
| 0.25 | 0.15 | 10 | 3.0 |
| 0.25 | 0.38 | 1 | 3.0 |
| | | 2 | 4.9 |
| | | 3 | 4.4 |
| | | 4 | 4.5 |
| | | . | . |
| | | . | . |
| | | . | . |
| | | 11 | 4.6 |
| | | 12 | 4.7 |

The results of this table clearly demonstrate that the immobilized Cu (II) pyridine complex can be used several times for the oxidative C—C coupling reaction of 2,6-di-tert-butylphenol without the catalytic activity thereof being lost. In elemental analysis of the immobilized catalyst it also appears that no changes have occured after said catalyst has been used several times.

Example 3

In the manner as described in Example 2, a new immobilized copolymer was manufactured while using 1-(4'-pyridyl)-3-vinyl-pyrrolidine instead of 4-vinylpyridine. The reactivity of the latter compound in radical addition reactions does not differ very much from that of 4-vinylpyridine. The catalyst complex was prepared by dissolving 0.5 mmol of 1-(4'-pyridyl)-3-vinyl-pyrrolidine monomer units of the immobilized copolymer in 15 ml of a 13:2, v/v mixture of 1,2-dichlorobenzene and methanol. 0.05 mmol of $CuCl_2.H_2O$ and 1 ml of a standard solution of sodium hydroxide in methanol were then added. The ratio [pyridine]:[$Cu^{2+}$] = 2. The reaction mixture was then saturated with oxygen in a bath which was kept at 25°C. by means of a thermostat. After adding 0.9 mol of 2,6-di-tert-butylphenol, the rate at which the oxygen was consumed was measured under a constant oxygen pressure of 100 kPa.

After approximately 95% conversion has been reached, shaking of the reaction vessel was discontinued. The catalyst was separated and the reaction products were processed in the same manner as described in Example 2. In this immobilized catalyst also it was necessary to shake vehemently so as to be able to disperse it again in fresh solvent. The reaction was then repeated. This process was carried out several times.

TABLE C

| Details of the immobilized styrene-1-(4'-pyridyl)-3-vinyl-pyrrolidine copolymer | | Number of times the catalyst is used | Reaction rate × $10^6$ ($mol.dm^{-3}.s^{-1}$) |
|---|---|---|---|
| Degree of functionalization | Degree of loading | | |
| 0.21 | 0.19 | 1 | 13.1 |
| | | 2 | 11.8 |
| | | 3 | 12.5 |
| | | 4 | 12.7 |
| | | 5 | 12.3 |
| 0.25 | 0.35 | 1 | 15.4 |
| | | 2 | 15.0 |
| | | 3 | 15.8 |
| | | 4 | 14.7 |
| | | 5 | 15.0 |

It appears from the reaction rates recorded in Table C that the Cu (II) 1-(4'-pyridyl)-3-vinyl-pyrrolidine catalyst can also be used several times without the catalytic activity being lost.

It further appears that the reaction rates, as follows from the rates at which the oxygen is consumed, are much larger than when the immobilized Cu(II)-pyridine complex is used. Apparently, the increased activity of 4-substituted aminopyridine catalyst systems over the usual amine systems also occurs when these systems are immobilized as is the case in the pseudo-heterogenic catalysts in the present invention.

For example, instead of using 2,6-dimethylphenol, a mixture of 2,6-dimethylphenol and 2,3,6-trimethylphenol can be used.

## Claims

1. A catalyst for the oxidative coupling of an organic compound having a phenol group, an amino group, a thiol group or an acetylene compound, characterized in that said catalyst comprises a copper complex of a substituted amino pyridine selected from those of the formulae

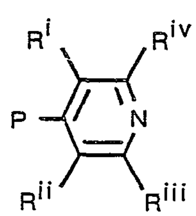

or

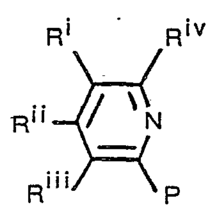

wherein $R^i$, $R^{ii}$, $R^{iii}$ and $R^{iv}$ each individually are selected from hydrogen, a hydrocarbon radical, a substituted hydrocarbon radical or a polymer chain radical, and P is an amino group of the formula $-N(R_1)(R_2)$, wherein $R_1$ and $R_2$ are selected from hydrogen, a hydrocarbon radical, a polymer chain radical or, when taken together with the nitrogen atom, form a heterocyclic ring, or a heterocyclic ring substituted with a polymer chain radical, with the proviso that $R_1$ and $R_2$ both cannot be hydrogen.

2. A catalyst for the oxidative coupling of a substituted phenol, characterized in that said catalyst comprises a copper complex of a pyridine as defined in claim 1.

3. A catalyst according to claim 1, wherein said pyridine is substituted by a polymeric chain radical and is chemically bonded through said polymeric chain radical to solid carrier particles.

4. A catalyst according to claim 3, wherein said polymeric chain radical of said pyridine is chemically bonded to silicon dioxide particles through a group of the formula

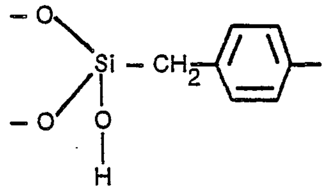

5. A catalyst according to claim 1, wherein said pyridine is substituted with a polymeric chain radical and wherein said polymeric chain radical is bonded to silicon dioxide particles through a group of the formula

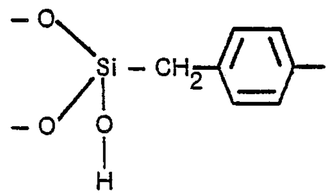

6. A method for the oxidative coupling of a compound selected from those of the formulae

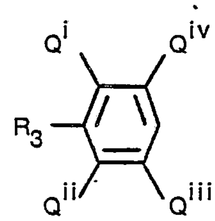

wherein $R_3$ is OH, SH or $NH_2$ and $Q^i$, $Q^{ii}$, $Q^{iii}$ and $Q^{iv}$ are, independently, hydrogen, halogen, a hydrocarbon radical, a halohydrocarbon radical, a hydrocarbonoxy radical, a halohydrocarbonoxy radical;

$$HC{\equiv}C{-}R_4;\ \text{or}$$

$$HC{\equiv}C{-}R_4{-}C{\equiv}CH,$$

wherein $R_4$ is an aromatic radical, a substituted aromatic radical or an aliphatic hydrocarbon radical, which comprises coupling such compounds in the presence of oxygen and a catalyst as defined in any of the foregoing claims 1 to 5.

**Patentansprüche**

1. Katalysator für die oxidative Kupplung einer organischen Verbindung mit einer Phenolgruppe, einer Aminogruppe, einer Thiolgruppe oder einer Acetylenverbindung, gekennzeichnet dadurch, daß der Katalysator einen Kupferkomplex aus einem substituierten Aminopyridin umfaßt, welches ausgewählt ist aus solchen mit der Formel

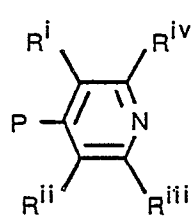

oder

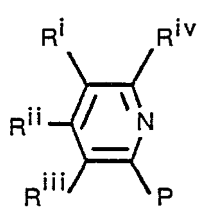

worin $R^i$, $R^{ii}$, $R^{iii}$ und $R^{iv}$ jeweils individuell ausgewählt sind aus Wasserstoff, einem Kohlenwasserstoffrest, einem substituierten Kohlenwasserstoffrest oder einem Polymerkettenrest und P eine Aminogruppe der Formel $-N(R_1)(R_2)$ ist, worin $R_1$ und $R_2$ ausgewählt sind aus Wasserstoff, einem Kohlenwasserstoffrest, einem Polymerkettenrest oder, wenn sie zusammen mit dem Stickstoffatom genommen werden, einen heterocyclischen Ring oder einen heterocyclischen Ring, substituiert mit einem Polymerkettenrest bilden, mit der Maßgabe, daß $R_1$ und $R_2$ beide nicht Wasserstoff sein können.

2. Katalysator für die oxidative Kupplung eines substituierten Phenols, gekennzeichnet dadurch, daß der Katalysator einen Kupferkomplex eines Pyridins umfaßt, wie er in Anspruch 1 definiert ist.

3. Katalysator nach Anspruch 1, worin das Pyridin durch einen Polymerkettenrest substituiert ist und durch diesen Polymerkettenrest chemisch an feste Trägerteilchen gebunden ist.

4. Katalysator nach Anspruch 3, dadurch gekennzeichnet, daß der Polymerkettenrestrest des Pyridins durch eine Gruppe der Formel

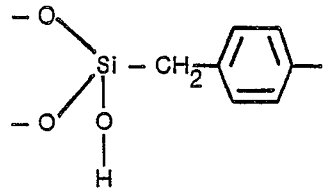

chemisch an Siliziumdioxidteilchen gebunden ist.

5. Katalysator nach Anspruch 1, worin das Pyridin mit einem Polymerkettenrest substituiert ist und worin der Polymerkettenrest durch eine Gruppe der Formel

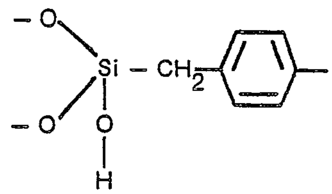

an Siliziumdioxidteilchen gebunden ist.

6. Verfahren zur oxidativen Kupplung einer Verbindung ausgewählt aus solchen der Formel

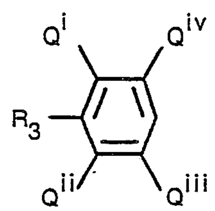

worin $R_3$ OH, SH oder $NH_2$ darstellt und $Q^i$, $Q^{ii}$, $Q^{iii}$ und $Q^{iv}$ unabhängig voneinander Wasserstoff, Halogen, einen Kohlenwasserstoffrest, Halogenkohlenwasserstoffrest, einen Kohlenwasserstoffoxyrest, einen Halogenkohlenwasserstoffrest,

$$HC{\equiv}C{-}R_4 \text{ oder}$$

$$HC{\equiv}C{-}R_4{-}C{\equiv}CH$$

darstellen, worin $R_4$ ein aromatischer Rest, ein substituierter aromatischer Rest oder ein aliphatischer Kohlenwasserstoffrest ist, welches die Kupplung einer solchen Verbindung in Anwesenheit von Sauerstoff und einem Katalysator umfaßt, wie er in einem der vorstehenden Ansprüche 1 bis 5 definiert ist.

**Revendications**

1. Catalyseur pour le couplage oxydant d'un composé comportant un groupe phénol, un groupe amino, un groupe thio ou un composé acétylénique, caractérisé en ce que le catalyseur est constitué par un complexe de cuivre d'une amino pyridine substituée choisie parmi celles répondant aux formules:

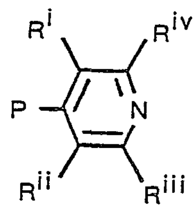

ou

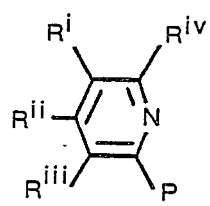

dans lesquelle $R^i$, $R^{ii}$, $R^{iii}$ et $R^{iv}$ chacun individuellement sont choisis dans le group constitué par l'hydrogène, un radical hydrocarboné, un radical hydrocarboné substitué ou un radical à chaîne polymère, et P est un groupe amino de formule —$N(R_1)(R_2)$ dans laquelle $R_1$ et $R_2$ sont choisis dans le groupe constitué par l'hydrogène, un radical hydrocarboné, un radical à chaîne polymère, ou lorsqu'ils sont pris en

combinaison avec l'atome d'azote, un noyau hétérocyclique, ou un noyau hétérocyclique substitué avec un radical à chaîne polymère, à la condition que $R_1$ et $R_2$ ne soient pas tous les deux l'hydrogène.

2. Catalyseur pour le couplage oxydant d'un phénol substitué, caractérisé en ce qu'il comprend un complexe de cuivre d'une pyridine comme définie à la revendication 1.

3. Catalyseur selon la revendication 1, caractérisé en ce que le pyridine est substituée avec un radical à chaîne polymère et est chimiquement liée par ledit radical à chaîne polymère à des particules solides de support.

4. Catalyseur selon la revendication 3, caractérisé en ce que le radical à chaîne polymère de la dite pyridine est chimiquement lié à des particules de dioxyde de silicium par un groupe répondant à la formule:

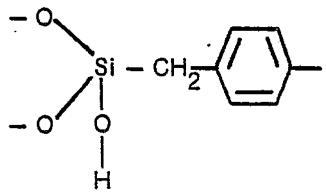

5. Catalyseur selon la revendication 1, caractérisé en ce que le substituant de la pyridine est un radical à chaîne polymère et en ce que le radical à chaîne polymère est lié à des particules de dioxyde de silicium par un groupe répondant à la formule:

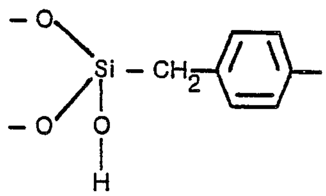

6. Procédé de couplage oxydant d'une composé choisi parmi ceux répondant à la formule:

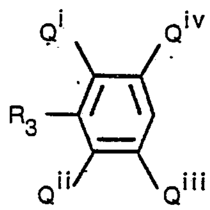

dans laquelle $R_3$ est OH, SH ou $NH_2$ et $Q^i$, $Q^{ii}$, $Q^{iii}$ et $Q^{iv}$ sont individuellement l'hydrogène, un halogène, un radical hydrocarboné, un radical halohydrocarboné, un radical oxyhydrocarboné, un radical halooxy-hydrocarboné,

$$HC{\equiv}C{-}R_4, \text{ ou}$$

$$HC{\equiv}C{-}R_4{-}C{\equiv}CH$$

dans lesquels $R_4$ est un radical aromatique, un radical aromatique substitué ou un radical hydrocarboné aliphatique, procédé constitué par le couplage de ce composé en présence d'oxygène et d'un catalyseur tel que défini dans l'une quelconque des revendications 1 à 5.